# EUROPÄISCHE PATENTANMELDUNG

(11) **EP 4 752 519 A1**
(43) Veröffentlichungstag der Anmeldung: **03.06.2026**
(21) Anmeldenummer: 25218708.3
(22) Anmeldetag: 26.11.2025
(51) Int. Cl.: G01M 17/02

(54) **LAGEREINHEIT MIT EINER FOLIENEINHEIT FÜR EINEN REIFENPRÜFSTAND, VERFAHREN ZUM HERSTELLEN EINER LAGEREINHEIT UND REIFENPRÜFSTAND MIT EINER LAGEREINHEIT**

(30) Priorität: 02.12.2024 DE 102024211493
(71) Anmelder: ZF Friedrichshafen AG, 88046 Friedrichshafen (DE)
(72) Erfinder: Bösl, Roland, 94127 Neuburg am Inn (DE); Böhm, Alexander, 94161 Ruderting (DE)
(74) Vertreter: ZF Friedrichshafen AG

(57) **Zusammenfassung**

Dargestellt und beschrieben ist eine Lagereinheit (3) für einen Reifenprüfstand (1), wobei die Lagereinheit (3) eine Trägereinheit (21) und eine Folieneinheit (23) aufweist, wobei die Trägereinheit (21) einen Eingangsabschnitt (25), der eine Eintrittsöffnung (27) definiert, und eine Vielzahl von Ausgangsabschnitten aufweist, wobei jeder Ausgangsabschnitt (29) eine Austrittsöffnung (31) definiert, wobei jede Austrittsöffnung (31) so mit der Eintrittsöffnung (27) verbunden ist, dass dann, wenn ein mit einem Druck beaufschlagtes gasförmiges Fluid in die Eintrittsöffnung (27) einströmt, das mit dem Druck beaufschlagte gasförmige Fluid aus jeder Austrittsöffnung (31) ausströmt, wobei die Folieneinheit (23) eine Vielzahl von Durchtrittsabschnitten aufweist, wobei jeder Durchtrittsabschnitt (33) eine Durchtrittsöffnung (35) definiert, und wobei die Trägereinheit (21) und die Folieneinheit (23) so relativ zueinander angeordnet sind, dass für jede Austrittsöffnung (31) die Austrittsöffnung (31) und eine der Austrittsöffnung (31) zugeordnete Durchtrittsöffnung (35) so relativ zueinander angeordnet sind, dass dann, wenn das mit dem Druck beaufschlagte gasförmige Fluid aus der Austrittsöffnung (31) ausströmt, das aus der Austrittsöffnung (31) ausströmende gasförmige Fluid durch die der Austrittsöffnung (31) zugeordnete Durchtrittsöffnung (35) hindurchströmt. Außerdem sind ein Verfahren und ein Reifenprüfstand (1) dargestellt und beschrieben.

## Beschreibung

Die vorliegende Erfindung betrifft eine Lagereinheit für einen Reifenprüfstand, ein Verfahren zum Herstellen einer Lagereinheit und einen Reifenprüfstand mit einer Lagereinheit.

Reifenprüfstände sind aus dem Stand der Technik bekannt. Diese Reifenprüfstände weisen gewöhnlich einen Rahmen und einen Reifenhalter auf. An dem Reifenhalter kann ein Reifen mit einer Lauffläche um seine Drehachse drehbar angebracht werden. Wenn an dem Reifenhalter der Reifen drehbar angebracht ist, kann der Reifen relativ zu dem Rahmen in unterschiedliche Positionen bewegt werden. Bei den aus dem Stand der Technik bekannten Reifenprüfständen ist eine Abrollflächeneinheit mit einer Abrollfläche vorgesehen, die gegenüber dem Rahmen bewegt werden kann. Die Abrollfläche der Abrollflächeneinheit kann auch als Straßenersatz bezeichnet werden und ist dafür vorgesehen, die Verhältnisse auf einer Straße angenähert nachzubilden.

Generell ist es wünschenswert, dass ein Prüfen von Reifen besonders zuverlässig durchgeführt werden kann.

Es ist daher die Aufgabe der vorliegenden Erfindung, eine Lagereinheit für einen Reifenprüfstand bereitzustellen, sodass das Prüfen von Reifen besonders zuverlässig durchgeführt werden kann.

Gemäß einem ersten Aspekt der Erfindung wird die genannte Aufgabe durch eine Lagereinheit mit den Merkmalen des Patentanspruchs 1 gelöst. Die Lagereinheit ist für einen Reifenprüfstand ausgebildet. Die Lagereinheit weist eine Trägereinheit und eine Folieneinheit auf. Die Trägereinheit weist einen Eingangsabschnitt, der eine Eintrittsöffnung definiert, und eine Vielzahl von Ausgangsabschnitten auf. Jeder Ausgangsabschnitt der Vielzahl von Ausgangsabschnitten definiert eine Austrittsöffnung. Jede Austrittsöffnung ist so mit der Eintrittsöffnung verbunden, dass dann, wenn ein mit einem Druck beaufschlagtes gasförmiges Fluid in die Eintrittsöffnung einströmt, das mit dem Druck beaufschlagte gasförmige Fluid aus jeder Austrittsöffnung ausströmt. Die Folieneinheit weist eine Vielzahl von Durchtrittsabschnitten auf. Jeder Durchtrittsabschnitt der Vielzahl von Durchtrittsabschnitten definiert eine Durchtrittsöffnung. Die Trägereinheit und die Folieneinheit sind so relativ zueinander angeordnet, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt.

Wie bereits beschrieben ist die Lagereinheit für einen Reifenprüfstand ausgebildet. Bevorzugt weist die Lagereinheit einen Befestigungsabschnitt auf mit dem die Lagereinheit an einem Befestigungsabschnitt des Reifenprüfstands befestigt werden kann. Bevorzugt kann der Befestigungsabschnitt der Lagereinheit an einem Befestigungsabschnitt eines Rahmens des Reifenprüfstands befestigt werden.

Wie ebenfalls bereits beschrieben weist die Lagereinheit eine Trägereinheit und eine Folieneinheit auf. Die Trägereinheit kann auch als Träger bezeichnet werden. Bevorzugt weist die Trägereinheit den Befestigungsabschnitt auf mit dem die Lagereinheit an dem Befestigungsabschnitt des Reifenprüfstands befestigt werden kann. Alternativ bevorzugt ist die Trägereinheit mit dem Befestigungsabschnitt verbunden mit dem die Lagereinheit an dem Befestigungsabschnitt des Reifenprüfstands befestigt werden kann. Die Folieneinheit kann auch als Folie oder als Gleitfolie bezeichnet werden. Bevorzugt weist die Folieneinheit eine Oberfläche auf, die in Richtung einer Umgebung der Lagereinheit weist. Die Folieneinheit ist insbesondere unabhängig von der Trägereinheit konfigurierbar und kann beispielsweise so eingestellt werden, dass die Oberfläche der Folieneinheit einen geringen Reibwert bei einer hohen Abriebfestigkeit und einer hohen Temperaturfestigkeit bereitstellt, insbesondere für den Fall, in dem die Oberfläche der Folieneinheit mit einer Oberfläche eines ebenen Riemenabschnitts einer Riemeneinheit des Reifenprüfstands in Kontakt kommt.

Wie ebenfalls bereits beschrieben weist die Trägereinheit einen Eingangsabschnitt, der eine Eintrittsöffnung definiert, und eine Vielzahl von Ausgangsabschnitten auf, wobei jeder Ausgangsabschnitt der Vielzahl von Ausgangsabschnitten eine Austrittsöffnung definiert. Wie ebenfalls bereits beschrieben ist jede Austrittsöffnung so mit der Eintrittsöffnung verbunden, dass dann, wenn ein mit einem Druck beaufschlagtes gasförmiges Fluid in die Eintrittsöffnung einströmt, das mit dem Druck beaufschlagte gasförmige Fluid aus jeder Austrittsöffnung ausströmt. Dadurch, dass die Trägereinheit den Eingangsabschnitt, der die Eintrittsöffnung definiert, und die Vielzahl von Ausgangsabschnitten aufweist, wobei jeder Ausgangsabschnitt der Vielzahl von Ausgangsabschnitten eine Austrittsöffnung definiert und jede Austrittsöffnung so mit der Eintrittsöffnung verbunden ist, dass dann, wenn ein mit dem Druck beaufschlagte gasförmige Fluid in die Eintrittsöffnung einströmt, das mit dem Druck beaufschlagte gasförmige Fluid aus jeder Austrittsöffnung ausströmt, wird gewährleistet, dass mithilfe der Lagereinheit im Bereich der Austrittsöffnungen ein Lager zum Führen der Riemeneinheit des Reifenprüfstands bereitgestellt werden kann, insbesondere da mithilfe des aus jeder Austrittsöffnung ausströmenden gasförmigen Fluids eine auf den ebenen Riemenabschnitt wirkende Kraft bereitgestellt werden kann, die in eine Richtung von der Lagereinheit hin zu dem ebenen Riemenabschnitt und in Richtung eines mit dem ebenen Riemenabschnitt in Kontakt stehenden Reifens wirkt.

Wie ebenfalls bereits beschrieben sind die Trägereinheit und die Folieneinheit so relativ zueinander angeordnet, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt. Dadurch, dass die Trägereinheit und die Folieneinheit so relativ zueinander angeordnet sind, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt, wird gewährleistet, dass die Lagereinheit so angeordnet sein kann, dass die Folieneinheit auf einer dem ebenen Riemenabschnitt zugewandten Seite der Trägereinheit angeordnet sein kann und bei dieser Anordnung mithilfe der Austrittsöffnungen, der Durchtrittsöffnungen und des gasförmigen Fluids sowie mithilfe der Folieneinheit ein Lager zum Führen der Riemeneinheit bereitgestellt werden kann. Dabei stellt die Lagereinheit zwei Funktionen bereit, sodass die Lagereinheit auch als hybride Lagereinheit oder Hybridlagereinheit bezeichnet werden kann. Eine erste Funktion der zwei Funktionen wird mithilfe der Austrittsöffnungen, der Durchtrittsöffnungen und des gasförmigen Fluids bereitgestellt, indem im Bereich der Austrittsöffnungen und der Durchtrittsöffnungen ein Lager zum Führen der Riemeneinheit bereitgestellt wird indem mithilfe des aus jeder Austrittsöffnung ausströmenden gasförmigen Fluids auf der Seite des ebenen Riemenabschnitts auf der die Lagereinheit angeordnet ist eine auf dieser Seite auf den ebenen Riemenabschnitt wirkende Kraft bereitgestellt werden kann, die in eine Richtung hin zu einer dieser Seite des ebenen Riemenabschnitts gegenüberliegenden Seite des ebenen Riemenabschnitts wirkt, sodass eine Verformung des ebenen Riemenabschnitts in eine Richtung hin zu der Seite des ebenen Riemenabschnitts, auf der die Lagereinheit angeordnet ist, verringert oder sogar vollständig verhindert werden kann. Wenn nun eine Belastung des ebenen Riemenabschnitts durch unterschiedliche Belastungszustände eines an einem Reifenhalter des Prüfstands angebrachten Reifens so stark ausfällt, dass sich der ebene Riemenabschnitt so stark verformt, dass er mit der Lagereinheit in Kontakt kommt, so ist für diesen Kontakt die Folieneinheit vorgesehen, die unabhängig von der Ausbildung der Trägereinheit auf den Kontakt mit dem ebenen Riemenabschnitt ausgelegt sein kann und eine für diesen Kontakt ausgebildete Oberfläche aufweist. Eine zweite Funktion der zwei Funktionen wird mithilfe der Folieneinheit bereitgestellt, indem zusätzlich mithilfe der Folieneinheit ein Lager zum Führen der Riemeneinheit bereitgestellt wird indem mithilfe der Folieneinheit die Oberfläche, die auch als Kontaktfläche bezeichnet werden kann, für den Kontakt mit dem ebenen Riemenabschnitt bereitgestellt wird, sodass eine auf den ebenen Riemenabschnitt zusätzlich wirkende Kraft bereitgestellt werden kann, die auf der Seite des ebenen Riemenabschnitt, auf der die Lagereinheit angeordnet ist, in eine Richtung hin zu der dem ebenen Riemenabschnitts wirkt.

Dadurch, dass die Lagereinheit mithilfe des mit Druck beaufschlagten gasförmigen Fluids und mithilfe der Folieneinheit eine doppelt wirkende Lagereinheit bereitstellen kann, können mithilfe der Lagereinheit besonders große Kräfte auf den ebenen Riemenabschnitt wirken, sodass mithilfe der Lagereinheit Reifenprüfstände im hohen Lastbereich, insbesondere mit Radlasten von mehr als einer Tonne (Radlasten>1t), betrieben werden können und dabei auf Wasserlager verzichtet werden kann. Wasserlager verwenden häufig Wasser für die Lagerung des ebenen Riemenabschnitts. Wasserlager weisen häufig einen Metallkörper bei dem über eine größere Anzahl von kleinen Bohrungen unter Druck stehendes Wasser aus der Oberfläche tritt und so zwischen eine Riemeneinheit, insbesondere einen ebenen Riemenabschnitt der Riemeneinheit, des Reifenprüfstands und dieser Oberfläche gelangt. Dieses unter Druck stehende Wasser und der resultierende Wasserfilm zwischen der Riemeneinheit und der beschriebenen Oberfläche trägt den ebenen Riemenabschnitt während es mit teilweise hoher Geschwindigkeit an der Oberfläche vorbeigeführt wird. Dabei wird das verwendete Wasser häufig aufgefangen und abgeführt und darf nicht zwischen Riemeneinheit und Umlenkrollen des Reifenprüfstands gelangen, weil dort die erforderliche Reibung vermindert wird und so die Riemeneinheitlageregelung im Extremfall versagt. Wenn das Wasser doch einmal zwischen Riemeneinheit und Umlenkrollen des Reifenprüfstands gelangt kann die Riemeneinheit die Traktions- und Seitenkräfte des Reifens nicht mehr an die Umlenkrollen abgeben. Sollte außerdem Wasser zwischen die Riemeneinheit und Reifen gelangen (Spritzwasser, Wassernebel) so werden die am Reifen ermittelten Messwerte verfälscht (die Reibung zwischen Reifen und Riemeneinheit wird verändert). Gewöhnlich sind am Wasserlager umlaufend Abstreifer installiert. Mit diesen wird versucht, den kompletten Wasserfilm sowie Spritzwasser kontrolliert abzuführen. Eine weitere Schwäche ist die Gefahr, dass die Abweiser von an der Unterseite der Riemeneinheit klebenden Reifenpartikeln beschädigt werden. Nach intensiven Tests müssen teilweise die Abweiser häufig ersetzt werden. Gegenüber Wasserlagern gewährleistet die erfindungsgemäße Lagereinheit also ein zuverlässigeres Prüfen von Reifen bei einem im Vergleich zu Wasserlagern einfacheren und wartungsärmeren Aufbau.

Auch Gegenüber Gegenlagern, die das Medium Luft verwenden und auch als Luftlager bezeichnet werden können, bietet die erfindungsgemäße Lagereinheit Vorteile. Bei den Luftlagern wird häufig Luft unter hohem Druck (30bar) zwischen die beiden gegeneinander gelagerten Teilen gepresst. Industrie übliche Luftlager arbeiten kontaktfrei. Sollte es im Betriebszustand zu Berührungen unter Bewegung kommen, so führt das zur Schädigung der Kontaktflächen. Solange davon ausgegangen werden kann, dass die beiden Teile ihre Form ausreichend genau halten, ist jedoch ein direkter Kontakt vermeidbar. Ein Kontakt zwischen zwei konventionell ausgeführten Partnern führt zu hoher Reibung und in Verbindung mit hohen Geschwindigkeiten zu hohen Reibleistungen und somit hohen Temperaturen, die die Oberflächen beschädigen. Bei Radlasten über einer Tonne und den damit erzielbaren Seitenkräften kommt es zu relevanten elastischen Verformungen der Riemeneinheit und insbesondere des ebenen Riemenabschnitts. Insbesondere aktuelle Reifenkonstruktionen erzeugen unter bestimmten Betriebsbedingungen hohe Druckspitzen. Infolgedessen kann auch die Riemeneinheit lokale Verformungen erfahren und so die Komponenten des Luftlagers berühren. Die zwingende Kontaktfreiheit ist in diesen Fällen nicht mehr umsetzbar. Deshalb herrscht das Vorurteil, dass Luftlager nur im Lastbereich bis zu einer Tonne, bei bestimmten Reifenarten und bei nur sehr begrenzten Seitenkräften verwendbar sind. Gegenüber Luftlagern gewährleistet die erfindungsgemäße Lagereinheit also, dass Reifenprüfstände auch für Lastbereiche von über einer Tonne zuverlässig betrieben werden können.

Bei der erfindungsgemäßen Lagereinheit kann aufgrund der Folieneinheit ein Kontakt zwischen der Lagereinheit und der Riemeneinheit, insbesondere dem ebenen Riemenabschnitt bewusst zugelassen werden. Bei an der erfindungsgemäßen Lagereinheit durchgeführten Versuchen konnte nachgewiesen werden, dass selbst unter extremen Betriebsbedingungen hinsichtlich Last, Luftdruck im Reifen und Seitenkräften durch Lenken immer noch über 95% der Belastung durch das mit dem Druck beaufschlagte gasförmige Fluid getragen wird.

Insbesondere kann mithilfe der erfindungsgemäßen Lagereinheit eine Beschädigung der Trägereinheit verhindert werden, was insbesondere im Vergleich zu Luftlagern, bei denen lediglich eine Trägereinheit und keine Folieneinheit vorgesehen ist, vorteilhaft ist. Insbesondere kann mithilfe der Folieneinheit eine geeignete Schicht bereitgestellt werden, deren Oberfläche einen geringen Reibwert bei hoher Abrieb- und Temperaturfestigkeit aufweist, sodass die verbleibenden 5% der Belastung durch diese lokalen Kontakte aufgenommen werden können. Somit können alle üblichen Reifentypen bei hohen Radlasten geprüft werden. Im Verschleißfall ist ein einfacher, schneller und kostengünstiger Austausch möglich. Nicht das Luftlager selbst ist Verschleiß ausgesetzt, sondern nur die Folieneinheit.

Zusammenfassend kann also festgestellt werden, dass mithilfe der vorliegenden Erfindung ein Prüfen von Reifen besonders zuverlässig durchgeführt werden kann.

In einer Ausführungsform sind die Trägereinheit und die Folieneinheit miteinander verbunden. Dadurch, dass die Trägereinheit und die Folieneinheit miteinander verbunden sind, wird eine besonders einfach aufgebaute Lagereinheit bereitgestellt, die besonders gewichtseinsparend ausgebildet sein kann, da insbesondere auf eine Platteneinheit verzichtet werden kann. Bevorzugt sind die Trägereinheit und die Folieneinheit miteinander verbunden indem die Folieneinheit auf die Trägereinheit aufgeklebt ist. Dadurch, dass die Folieneinheit auf die Trägereinheit aufgeklebt ist, kann die Folieneinheit besonders einfach ersetzt werden. Bevorzugt weist die Folieneinheit auf einer Seite eine Klebstoffschicht auf, mit der der übrige Abschnitt der Folieneinheit beschichtet ist. Die Folieneinheit kann dann auch als einseitig mit Klebstoff beschichtete Folieneinheit bezeichnet werden, wobei der Klebstoff ein Bestandteil der Folieneinheit ist. Bevorzugt ist die Klebstoffschicht aus dem Klebstoff gebildet. Bevorzugt ist der Klebstoff ein Haftklebstoff. Dadurch, dass das Klebstoff ein Haftklebstoff ist, wird gewährleistet, dass die Trägereinheit und die Folieneinheit besonders einfach miteinander verbunden werden können. Bevorzugt weist der Klebstoff ein Silikon auf.

In einer Ausführungsform ist zwischen der Trägereinheit und der Folieneinheit eine Platteneinheit angeordnet, wobei die Platteneinheit und die Folieneinheit miteinander verbunden sind. Dadurch, dass zwischen der Trägereinheit und der Folieneinheit eine Platteneinheit angeordnet ist, wobei die Platteneinheit und die Folieneinheit miteinander verbunden sind, wird gewährleistet, dass die Platteneinheit zusammen mit der Folieneinheit ersetzt werden können, insbesondere ohne, dass die Trägereinheit ersetzt oder bearbeitet werden muss. Bevorzugt ist die Platteneinheit auf einer ersten Seite der Platteneinheit mit der Trägereinheit verbunden und ist auf einer der ersten Seite gegenüberliegenden zweiten Seite der Platteneinheit mit der Folieneinheit verbunden. Wenn nun die Folieneinheit erneuert werden soll, können die Trägereinheit und die Platteneinheit voneinander getrennt werden und die Platteneinheit kann zusammen mit der Folieneinheit entfernt werden und eine neue Platteneinheit, die ebenfalls mit einer Folieneinheit verbunden ist, kann mit der Trägereinheit verbunden werden. Dadurch, dass zwischen der Trägereinheit und der Folieneinheit die Platteneinheit angeordnet ist, wobei die Platteneinheit und die Folieneinheit miteinander verbunden sind, wird also der Austausch der Folieneinheit deutlich vereinfacht. Bevorzugt sind die Platteneinheit und die Folieneinheit miteinander verbunden, indem die Folieneinheit auf die Platteneinheit aufgeklebt ist. Dadurch, dass die Folieneinheit auf die Platteneinheit aufgeklebt ist, kann die Folieneinheit besonders einfach mit der Platteneinheit verbunden werden und wieder von der Platteneinheit entfernt werden.

In einer Ausführungsform weist die Trägereinheit ein Metall oder eine Metalllegierung auf. Dadurch, dass die Trägereinheit ein Metall oder eine Metalllegierung aufweist, wird gewährleistet, dass eine mechanisch besonders robuste Trägereinheit bereitgestellt wird. Bevorzugt ist die Trägereinheit aus einem Metall oder einer Metalllegierung gebildet, sodass die Trägereinheit mechanisch besonders robust ausgebildet sein kann. Bevorzugt ist die Trägereinheit aus Stahl gebildet, sodass die mechanische Robustheit der Trägereinheit besonders optimal eingestellt ist. Bevorzugt ist die Trägereinheit aus Aluminium gebildet, sodass die Trägereinheit besonders gewichtssparend ausgebildet sein.

In einer Ausführungsform weist die Folieneinheit ein Gewebe auf. Dadurch, dass die Folieneinheit ein Gewebe aufweist, wird gewährleistet, dass die Folieneinheit besonders mechanisch robust ausgebildet ist. Bevorzugt erstreckt sich das Gewebe innerhalb einer Ebene, in der sich die Folieneinheit erstreckt, sodass mithilfe des Gewebes insbesondere innerhalb dieser Ebene die Folieneinheit mechanisch besonders robust ausgebildet sein kann. Bevorzugt ist das Gewebe ein Glasgewebe. Dadurch, dass das Gewebe ein Glasgewebe ist, kann die Folieneinheit bei einem geringen Gewicht mechanisch robust ausgebildet sein.

In einer Ausführungsform weist die Folieneinheit ein Polymer auf. Dadurch, dass die Folieneinheit ein Polymer aufweist kann eine Oberfläche mit einem besonders geringen Reibwert bereitgestellt werden. Bevorzugt weist die Folieneinheit ein Fluorpolymer auf. Dadurch, dass die Folieneinheit das Fluorpolymer aufweist, wird ein besonders geringer Reibwert bereitgestellt. Bevorzugt weist die Folieneinheit Polytetrafluorethylen (PTFE) auf. Dadurch, dass die Folieneinheit Polytetrafluorethylen (PTFE) aufweist, wird ein besonders geringer Reibwert bereitgestellt. Insbesondere kann dadurch, dass die Folieneinheit Polytetrafluorethylen (PTFE) aufweist, die Folieneinheit eine Oberfläche für einen Kontakt mit der Riemeneinheit, insbesondere mit dem ebenen Riemenabschnitt, bereitstellen, wobei die Oberfläche einen geringen Reibwert bei einer hohen Abriebfestigkeit und einer hohen Temperaturfestigkeit aufweist. Bevorzugt weist die Folieneinheit ein Glasgewebe und Polytetrafluorethylen (PTFE) auf, wobei das Glasgewebe von dem Polytetrafluorethylen (PTFE) ummantelt ist. Dadurch, dass die Folieneinheit ein Glasgewebe und Polytetrafluorethylen (PTFE) aufweist, wobei das Glasgewebe von dem Polytetrafluorethylen (PTFE) ummantelt ist, kann mithilfe des Glasgewebes eine mechanische Robustheit der Folieneinheit bereitgestellt werden, insbesondere innerhalb einer Ebene, in der sich die Folieneinheit erstreckt, und das Polytetrafluorethylen (PTFE) kann das Glasgewebe schützen und die Oberfläche für den Kontakt mit der Riemeneinheit bereitstellen, sodass die Oberfläche einen besonders geringen Reibwert bei einer hohen Abriebfestigkeit und einer hohen Temperaturfestigkeit bereitstellen kann.

Gemäß einem zweiten Aspekt der Erfindung wird die genannte Aufgabe durch ein Verfahren mit den Merkmalen des Patentanspruchs 7 gelöst. Das Verfahren ist zum Herstellen einer Lagereinheit gemäß dem ersten Aspekt der Erfindung vorgesehen. Das Verfahren weist die folgenden Schritte auf: Bereitstellen der Trägereinheit und der Folieneinheit so, dass die Trägereinheit und die Folieneinheit so relativ zueinander angeordnet sind, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt. Dadurch, dass die Trägereinheit und die Folieneinheit so relativ zueinander angeordnet sind, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt, wird gewährleistet, dass die Lagereinheit so angeordnet sein kann, dass die Folieneinheit auf einer dem ebenen Riemenabschnitt zugewandten Seite der Trägereinheit angeordnet sein kann und bei dieser Anordnung mithilfe der Austrittsöffnungen, der Durchtrittsöffnungen und des gasförmigen Fluids sowie mithilfe der Folieneinheit ein Lager zum Führen der Riemeneinheit bereitgestellt werden kann. Dabei stellt die Lagereinheit die zwei bereits beschriebenen Funktionen bereit.

In einer Ausführungsform wird die Folieneinheit so auf die Trägereinheit geklebt, dass die Trägereinheit und die Folieneinheit so relativ zueinander angeordnet sind, dass für jede Austrittsöffnung die entsprechende Austrittsöffnung und eine der entsprechenden Austrittsöffnung zugeordnete Durchtrittsöffnung so relativ zueinander angeordnet sind, dass dann, wenn das mit dem Druck beaufschlagte gasförmige Fluid aus der entsprechenden Austrittsöffnung ausströmt, das aus der entsprechenden Austrittsöffnung ausströmende gasförmige Fluid durch die der entsprechenden Austrittsöffnung zugeordnete Durchtrittsöffnung hindurchströmt. Dadurch, dass die Folieneinheit auf die Trägereinheit geklebt wird, wird gewährleistet, dass die Lagereinheit besonders einfach und schnell hergestellt werden kann und die Folieneinheit besonders einfach ersetzt werden kann.

Die im Zusammenhang mit der Lagereinheit gemäß dem ersten Aspekt der Erfindung beschriebenen Merkmale, technischen Effekte und/oder Vorteile gelten zumindest in analoger Weise auch für das Verfahren gemäß dem zweiten Aspekt der Erfindung, sodass an dieser Stelle auf eine entsprechende Wiederholung verzichtet wird. Auch wenn die Verfahrensschritte in einer bestimmten Reihenfolge beschrieben werden, ist die vorliegende Erfindung nicht auf diese Reihenfolge beschränkt. Vielmehr können die einzelnen Verfahrensschritte in beliebig sinnvoller Reihenfolge, insbesondere auch zumindest abschnittsweise zeitlich parallel zueinander, durchgeführt werden.

Gemäß einem dritten Aspekt der Erfindung wird die genannte Aufgabe durch einen Reifenprüfstand mit den Merkmalen des Patentanspruchs 9 gelöst. Der Reifenprüfstand weist einen Rahmen auf. Außerdem weist der Reifenprüfstand einen an dem Rahmen angebrachten Reifenhalter auf, an dem ein Reifen mit einer Lauffläche um seine Drehachse drehbar angebracht werden kann. Außerdem weist der Reifenprüfstand eine Riemeneinheit auf. Außerdem weist der Reifenprüfstand zwei gegenüber dem Rahmen drehbar gelagerte Umlenkrollen auf. Die Umlenkrollen sind von der Riemeneinheit teilweise umschlungen, sodass die Riemeneinheit zwischen den Umlenkrollen einen ebenen Riemenabschnitt bildet. Dann, wenn an dem Reifenhalter der Reifen drehbar angebracht ist, kann der Reifen auf einer ersten Seite des ebenen Riemenabschnitts in eine Kontaktposition verbracht werden, in der die Lauffläche des Reifens und der ebene Riemenabschnitt in Kontakt sind. Dann, wenn der Reifen und der ebene Riemenabschnitt in Kontakt sind und die Riemeneinheit gegenüber dem Reifen bewegt wird, rollt der Reifen auf dem ebenen Riemenabschnitt ab. Der Reifenprüfstand weist außerdem eine Lagereinheit gemäß dem ersten Aspekt der Erfindung auf. Die Lagereinheit ist so auf einer der ersten Seite gegenüberliegenden zweiten Seite des ebenen Riemenabschnitts angeordnet, dass die Folieneinheit auf einer dem ebenen Riemenabschnitt zugewandten Seite der Trägereinheit angeordnet ist. Jede Umlenkrolle kann auch als Trommel bezeichnet werden. Dadurch, dass die Lagereinheit auf der zweiten Seite des ebenen Riemenabschnitts angeordnet ist, kann die Lagereinheit der Verformung des ebenen Riemenabschnitts in die Richtung hin zu der zweiten Seite des ebenen Riemenabschnitts entgegenwirken oder eine Verformung des ebenen Riemenabschnitts in die Richtung hin zu der zweiten Seite des ebenen Riemenabschnitts sogar verhindern. Dadurch, dass die Lagereinheit so auf der der ersten Seite gegenüberliegenden zweiten Seite des ebenen Riemenabschnitts angeordnet ist, dass die Folieneinheit auf der dem ebenen Riemenabschnitt zugewandten Seite der Trägereinheit angeordnet ist, wird gewährleistet, dass die Folieneinheit für einen Kontakt mit dem ebenen Riemenabschnitt vorgesehen ist und die Folieneinheit die Trägereinheit vor einem Kontakt mit dem ebenen Riemenabschnitt schützt. Somit kann also gezielt die Folieneinheit für einen Kontakt mit dem ebenen Riemenabschnitt ausgelegt sein und bei einem Verschleiß der Folieneinheit kann die Folieneinheit erneuert oder ersetzt werden und die Trägereinheit kann weiter verwendet werden, wodurch eine besonders ressourcenschonende Lagereinheit und ein besonders ressourcenschonender Reifenprüfstand bereitgestellt werden kann.

In einer Ausführungsform weist die Riemeneinheit ein Metall oder eine Metalllegierung auf. Dadurch, dass die Riemeneinheit ein Metall oder eine Metalllegierung aufweist, wird gewährleistet, dass die Riemeneinheit mechanisch besonders robust ausgebildet ist. Bevorzugt ist die Riemeneinheit aus Stahl gebildet, wodurch gewährleistet wird, dass die Riemeneinheit bei unterschiedlichen Belastungszuständen des Reifens lediglich besonders geringfügig verformt wird. wodurch mithilfe des Reifenprüfstands Reifen mechanisch besonders stark belastet werden können. Wenn die Riemeneinheit aus Stahl gebildet ist, kann die Riemeneinheit auch als Stahlband bezeichnet werden.

Die im Zusammenhang mit der Lagereinheit gemäß dem ersten Aspekt der Erfindung beschriebenen Merkmale, technischen Effekte und/oder Vorteile und die im Zusammenhang mit dem Verfahren gemäß dem zweiten Aspekt der Erfindung beschriebenen Merkmale, technischen Effekte und/oder Vorteile gelten zumindest in analoger Weise auch für den Reifenprüfstand gemäß dem dritten Aspekt der Erfindung, sodass an dieser Stelle auf eine entsprechende Wiederholung verzichtet wird.

Es hat sich herausgestellt, dass sich mithilfe der Lagereinheit gemäß dem ersten Aspekt der vorliegenden Erfindung folgende Vorteile gegenüber aus dem Stand der Technik bekannten Wasserlagern erzielen lassen: mithilfe der Lagereinheit gemäß dem ersten Aspekt der vorliegenden Erfindung entfallen Abstreifer (inkl. Konditionierung, Justage, Austausch, ...). Mithilfe der Lagereinheit gemäß dem ersten Aspekt der vorliegenden Erfindung wird das Risiko der Verfälschung der Messungen durch Spritzwasser vermieden. Mithilfe der Lagereinheit gemäß dem ersten Aspekt der vorliegenden Erfindung wird das Risiko des Ausfalls der Riemeneinheitlageregelung in Folge von Reibungsverlust zwischen Riemeneinheit und Umlenkrollen vermieden. Mithilfe der Lagereinheit gemäß dem ersten Aspekt der vorliegenden Erfindung wird das Risiko einer Korrosion von Bauteilen der Lagereinheit und das Risiko einer Korrosion von Bauteilen des Reifenprüfstands deutlich reduziert. Mithilfe der Lagereinheit gemäß dem ersten Aspekt der vorliegenden Erfindung wird eine Vermischung von Reifenpartikeln mit Wasser vermieden (Verschmutzung der Anlage). Mithilfe der Lagereinheit gemäß dem ersten Aspekt der vorliegenden Erfindung ist kein Austausch von verbrauchtem Wasser notwendig (Geruchsbelästigung). Mithilfe der Lagereinheit gemäß dem ersten Aspekt der vorliegenden Erfindung ist keine Druckwasseranlage erforderlich.

Es hat sich herausgestellt, dass sich mithilfe der Lagereinheit gemäß dem ersten Aspekt der vorliegenden Erfindung folgende Vorteile gegenüber aus dem Stand der Technik bekannten Luftlagern erzielen lassen: Mithilfe der Lagereinheit gemäß dem ersten Aspekt der vorliegenden Erfindung sind hohe Rad- und Seitenkräfte sicher beherrschbar. Mithilfe der Lagereinheit gemäß dem ersten Aspekt der vorliegenden Erfindung sind Kosten der Gleitfolie gering. Mithilfe der Lagereinheit gemäß dem ersten Aspekt der vorliegenden Erfindung ist ein sehr schneller und einfacher Austausch der Gleitfolie und somit eine kurze Stillstandszeit der Anlage gewährleistet. Mithilfe der Lagereinheit gemäß dem ersten Aspekt der vorliegenden Erfindung ist eine sehr kurze Stillstandszeit der Anlage bei Beschädigung und Instandsetzung gewährleistet.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine schematische Darstellungen einer Ausführungsform eines erfindungsgemäßen Reifenprüfstands,
- Figur 2: zeigt eine schematische Darstellungen einer Ausführungsform einer erfindungsgemäßen Lagereinheit, und
- Figur 3: zeigt eine schematische Darstellung einer Ausführungsform eines erfindungsgemäßen Verfahrens zum Herstellen der in Figur 2 schematisch dargestellten Ausführungsform der erfindungsgemäßen Lagereinheit.

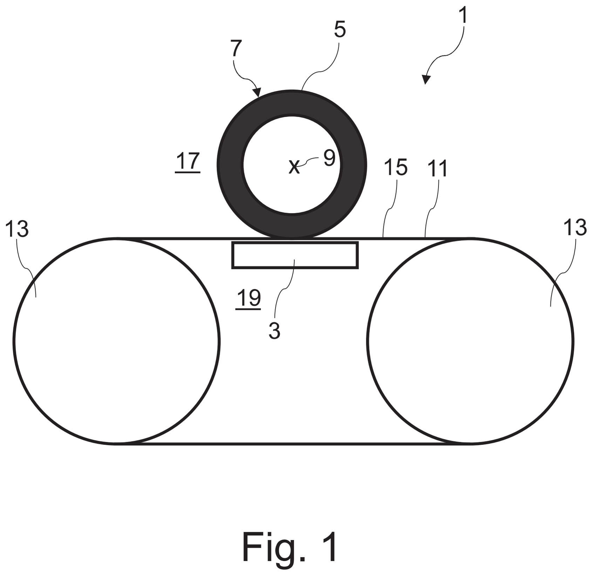

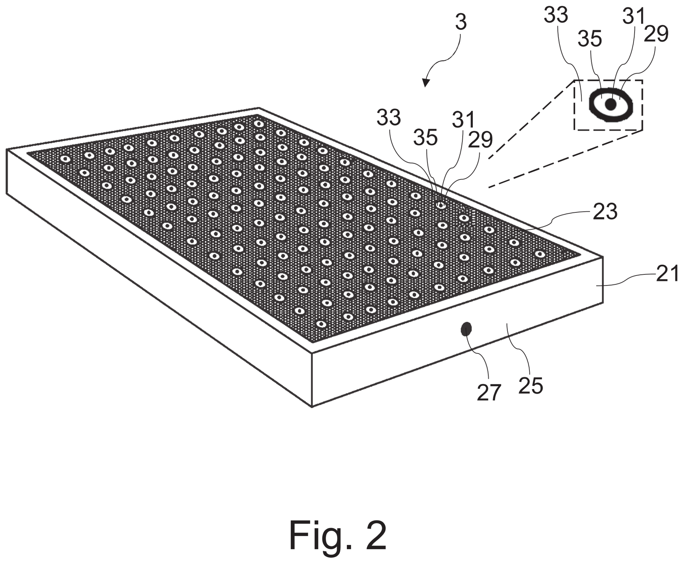

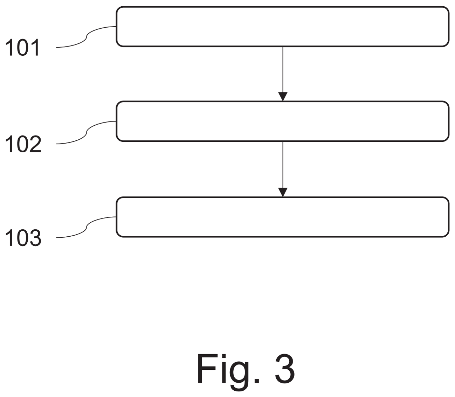

Figur 1 zeigt eine schematische Darstellungen einer Ausführungsform eines erfindungsgemäßen Reifenprüfstands 1, Figur 2 zeigt eine schematische Darstellungen einer Ausführungsform einer erfindungsgemäßen Lagereinheit 3, und Figur 3 zeigt eine schematische Darstellung einer Ausführungsform eines erfindungsgemäßen Verfahrens zum Herstellen der in Figur 2 schematisch dargestellten Ausführungsform der erfindungsgemäßen Lagereinheit 3.

Der Reifenprüfstand 1 weist einen nicht dargestellten Rahmen auf. Außerdem weist der Reifenprüfstand 1 einen an dem Rahmen angebrachten und ebenfalls nicht dargestellten Reifenhalter auf. An dem Reifenhalter kann ein Reifen 5 mit einer Lauffläche 7 um seine Drehachse 9 drehbar angebracht werden. Außerdem weist der Reifenprüfstand 1 eine Riemeneinheit 11 auf. Außerdem weist der Reifenprüfstand 1 zwei gegenüber dem Rahmen drehbar gelagerte Umlenkrollen auf. Jede Umlenkrolle 13 der Umlenkrollen ist von der Riemeneinheit 11 teilweise umschlungen. Die Umlenkrollen sind also von der Riemeneinheit 11 teilweise umschlungen. Die Umlenkrollen sind von der Riemeneinheit 11 teilweise so umschlungen, dass die Riemeneinheit 11 zwischen den Umlenkrollen einen ebenen Riemenabschnitt 15 bildet. Dann, wenn an dem Reifenhalter der Reifen 5 drehbar angebracht ist, kann der Reifen 5 auf einer ersten Seite 17 des ebenen Riemenabschnitts 15 in eine Kontaktposition verbracht werden, die in Figur 1 dargestellt ist und in der die Lauffläche 7 des Reifens 5 und der ebene Riemenabschnitt 15 in Kontakt sind. Der Reifenprüfstand 1 weist eine nicht dargestellte Riemenantriebseinheit auf. Die Riemenantriebseinheit kann die Riemeneinheit 11 in einer Riemenumlaufrichtung antreiben. Die Riemenantriebseinheit ist mit einer Umlenkrolle 13 der Umlenkrollen gekoppelt, um die Riemeneinheit 11 über diese Umlenkrolle 13 in der Riemenumlaufrichtung anzutreiben. Wenn nun der Reifen 5 und der ebene Riemenabschnitt 15 in Kontakt sind und die Riemeneinheit 11 gegenüber dem Reifen 5 bewegt wird, rollt der Reifen 5 auf dem ebenen Riemenabschnitt 15 ab. Der Reifenprüfstand 1 weist außerdem die Lagereinheit 3 auf. Die Lagereinheit 3 ist auf einer der ersten Seite 17 gegenüberliegenden zweiten Seite 19 des ebenen Riemenabschnitts 15 angeordnet.

Der Reifen 5 kann in Bezug zu dem ebenen Riemenabschnitt 15 positioniert werden. Insbesondere kann der Reifen 5 durch Einstellen eines Antriebselements oder durch Einstellen mehrerer Antriebselemente in die Kontaktposition verbracht werden, in der die Lauffläche 7 des Reifens 5 mit dem ebenen Riemenabschnitt 15 in Kontakt ist. Weiter kann der Reifen 5 durch Einstellen eines Antriebselements oder durch Einstellen mehrerer Antriebselemente neben der Kontaktposition in weitere Kontaktpositionen verbracht werden, in der die Lauffläche 7 des Reifens 5 ebenfalls mit dem ebenen Riemenabschnitt 15 in Kontakt ist. Rollt nun der Reifen 5 auf dem ebenen Riemenabschnitt 15 ab, wird der Reifen 5 beim Abrollen in unterschiedliche Belastungszustände verbracht. Durch Einstellen des Antriebselements oder der mehreren Antriebselemente kann beim Abrollen des Reifens 5 auf dem ebenen Riemenabschnitt 15 der Sturz des Reifens 5, der Schräglauf des Reifens 5, die Reifenlast des Reifens 5, und/oder die Position des Reifens 5 relativ zu dem ebenen Riemenabschnitt 15 eingestellt werden. Außerdem kann mithilfe einer Reifenantriebseinheit des Reifenprüfstands 1 der Reifen 5 in einer Reifenumlaufrichtung angetrieben werden oder mithilfe einer Reifenabbremseinheit in der Reifenumlaufrichtung abgebremst werden. Hierdurch kann der Reifen 5 beim Abrollen in unterschiedliche Belastungszustände verbracht werden. In jedem Belastungszustand des Reifens 5 wirken unterschiedliche Reaktionskräfte auf den Reifen 5, die mithilfe einer Erfassungseinheit des Reifenprüfstands 1 erfasst werden können. Da der Reifen 5 auf dem ebenen Riemenabschnitt 15 abrollt, wird gewährleistet, dass eine Situation, in der der Reifen 5 auf einer realen Straße abrollt, besonders gut nachgebildet werden kann. In jedem Belastungszustand des Reifens 5 wirken nicht nur Reaktionskräfte auf den Reifen 5. Vielmehr wirken in den unterschiedlichen Belastungszuständen auch Kräfte auf die Riemeneinheit 11 und insbesondere auf den ebenen Riemenabschnitt 15. Diese Kräfte können beispielsweise zu einer Verformung des ebenen Riemenabschnitts 15 in eine Richtung hin zu der zweiten Seite 19 des ebenen Riemenabschnitts 15 führen. Die Lagereinheit 3 ist auf der zweiten Seite 19 des ebenen Riemenabschnitts 15 angeordnet und kann dadurch der Verformung des ebenen Riemenabschnitts 15 in die Richtung hin zu der zweiten Seite 19 des ebenen Riemenabschnitts 15 entgegenwirken oder eine Verformung des ebenen Riemenabschnitts 15 in die Richtung hin zu der zweiten Seite 19 des ebenen Riemenabschnitts 15 sogar verhindern.

Die Lagereinheit 3 ist für den Reifenprüfstand 1 ausgebildet. Die Lagereinheit 3 weist einen Befestigungsabschnitt auf mit dem die Lagereinheit 3 an einem Befestigungsabschnitt des Reifenprüfstands 1 befestigt werden kann. Bei dem in Figur 1 dargestellten Ausführungsbeispiel des Reifenprüfstands 1 kann der Befestigungsabschnitt der Lagereinheit 3 an einem Befestigungsabschnitt des Rahmens des Reifenprüfstands 1 befestigt werden.

Die Lagereinheit 3 weist eine Trägereinheit 21 und eine Folieneinheit 23 auf. Die Trägereinheit 21 weist einen Eingangsabschnitt 25 und eine Vielzahl von Ausgangsabschnitten auf. Der Eingangsabschnitt 25 definiert eine Eintrittsöffnung 27. Jeder Ausgangsabschnitt 29 der Vielzahl von Ausgangsabschnitten definiert eine Austrittsöffnung 31. Bei der in Figur 2 schematisch dargestellten Ausführungsform der erfindungsgemäßen Lagereinheit 3 sind beispielhaft 130 Ausgangsabschnitte und 130 Austrittsöffnungen schematisch dargestellt. Jede Austrittsöffnung 31 ist so mit der Eintrittsöffnung 27 verbunden, dass dann, wenn ein mit einem Druck beaufschlagtes gasförmiges Fluid in die Eintrittsöffnung 27 einströmt, das mit dem Druck beaufschlagte gasförmige Fluid aus jeder Austrittsöffnung 31 ausströmt. Dadurch, dass jede Austrittsöffnung 31 so mit der Eintrittsöffnung 27 verbunden ist, dass dann, wenn das mit dem Druck beaufschlagte gasförmige Fluid in die Eintrittsöffnung 27 einströmt, das mit dem Druck beaufschlagte gasförmige Fluid aus jeder Austrittsöffnung 31 ausströmt, wird gewährleistet, dass mithilfe der Lagereinheit 3 im Bereich der Austrittsöffnungen ein Lager zum Führen der Riemeneinheit 11 bereitgestellt werden kann, insbesondere da mithilfe des aus jeder Austrittsöffnung 31 ausströmenden gasförmigen Fluids auf der zweiten Seite 19 des ebenen Riemenabschnitts 15 eine auf der zweiten Seite 19 auf den ebenen Riemenabschnitt 15 wirkende Kraft bereitgestellt werden kann, die in eine Richtung hin zu der ersten Seite 17 des ebenen Riemenabschnitts 15 wirkt. In der Trägereinheit 21 sind Kanäle vorgesehen, die die Eintrittsöffnung 27 und die Austrittsöffnungen miteinander verbinden, sodass das mit dem Druck beaufschlagte Fluid in die Eintrittsöffnung 27 einströmen und aus jeder Austrittsöffnung 31 ausströmen kann. Der Reifenprüfstand 1 weist eine Verdichtereinheit auf, die mit der Eintrittsöffnung 27 verbunden werden kann und die das mit dem Druck beaufschlagte gasförmige Fluid bereitstellt. Bei dem Reifenprüfstand 1 ist eine Verdichtereinheit vorgesehen, die Luft als gasförmiges Fluid bereitstellt, sodass der Reifenprüfstand 1 besonders einfach aufgebaut sein kann. Mithilfe der Lagereinheit 3 kann also im Bereich der Austrittsöffnungen ein Luftlager zum Führen der Riemeneinheit 11 bereitgestellt werden, wobei sich die Lagereinheit 3 von aus dem Stand der Technik bekannten Luftlagern unterscheidet, worauf im weiteren im Detail eingegangen wird.

Die Folieneinheit 23 weist eine Vielzahl von Durchtrittsabschnitten auf. Jeder Durchtrittsabschnitt 33 der Vielzahl von Durchtrittsabschnitten definiert eine Durchtrittsöffnung 35. Bei der in Figur 2 schematisch dargestellten Ausführungsform der erfindungsgemäßen Lagereinheit 3 sind beispielhaft 130 Durchtrittsabschnitte und 130 Durchtrittsöffnungen schematisch dargestellt. Die Trägereinheit 21 und die Folieneinheit 23 sind so relativ zueinander angeordnet, dass für jede Austrittsöffnung 31 die entsprechende Austrittsöffnung 31 und eine der entsprechenden Austrittsöffnung 31 zugeordnete Durchtrittsöffnung 35 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid durch die der entsprechenden Austrittsöffnung 31 zugeordnete Durchtrittsöffnung 35 hindurchströmt. Dadurch, dass die Trägereinheit 21 und die Folieneinheit 23 so relativ zueinander angeordnet sind, dass für jede Austrittsöffnung 31 die entsprechende Austrittsöffnung 31 und eine der entsprechenden Austrittsöffnung 31 zugeordnete Durchtrittsöffnung 35 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid durch die der entsprechenden Austrittsöffnung 31 zugeordnete Durchtrittsöffnung 35 hindurchströmt, wird gewährleistet, dass die Lagereinheit 3 so angeordnet sein kann, dass die Folieneinheit 23 auf einer dem ebenen Riemenabschnitt 15 zugewandten Seite der Trägereinheit 21 angeordnet sein kann und bei dieser Anordnung mithilfe der Austrittsöffnungen, der Durchtrittsöffnungen und des gasförmigen Fluids sowie mithilfe der Folieneinheit 23 ein Lager zum Führen der Riemeneinheit 11 bereitgestellt werden kann. Dabei stellt die Lagereinheit 3 zwei Funktionen bereit, sodass die Lagereinheit 3 auch als hybride Lagereinheit oder Hybridlagereinheit bezeichnet werden kann. Eine erste Funktion der zwei Funktionen wird mithilfe der Austrittsöffnungen, der Durchtrittsöffnungen und des gasförmigen Fluids bereitgestellt, indem im Bereich der Austrittsöffnungen und der Durchtrittsöffnungen ein Lager zum Führen der Riemeneinheit 11 bereitgestellt wird indem mithilfe des aus jeder Austrittsöffnung 31 ausströmenden gasförmigen Fluids auf der zweiten Seite 19 des ebenen Riemenabschnitts 15 eine auf der zweiten Seite 19 auf den ebenen Riemenabschnitt 15 wirkende Kraft bereitgestellt werden kann, die in eine Richtung hin zu der ersten Seite 17 des ebenen Riemenabschnitts 15 wirkt, sodass eine Verformung des ebenen Riemenabschnitts 15 in eine Richtung hin zu der zweiten Seite 19 des ebenen Riemenabschnitts 15 verringert oder sogar vollständig verhindert wird. Wenn nun eine Belastung des ebenen Riemenabschnitts 15 durch unterschiedliche Belastungszustände des Reifens 5 so stark ausfällt, dass sich der ebene Riemenabschnitt 15 so stark verformt, dass er mit der Lagereinheit 3 in Kontakt kommt, so ist für diesen Kontakt die Folieneinheit 23 vorgesehen, die unabhängig von der Ausbildung der Trägereinheit 21 auf den Kontakt mit dem ebenen Riemenabschnitt 15 ausgelegt sein kann. Eine zweite Funktion der zwei Funktionen wird mithilfe der Folieneinheit 23 bereitgestellt, indem zusätzlich mithilfe der Folieneinheit 23 ein Lager zum Führen der Riemeneinheit 11 bereitgestellt wird indem mithilfe der Folieneinheit 23 eine Kontaktfläche für den Kontakt mit dem ebenen Riemenabschnitt 15 bereitgestellt wird, sodass eine auf der zweiten Seite 19 auf den ebenen Riemenabschnitt 15 zusätzlich wirkende Kraft bereitgestellt werden kann, die in eine Richtung hin zu der ersten Seite 17 des ebenen Riemenabschnitts 15 wirkt.

Bei der in Figur 2 schematisch dargestellten Ausführungsform der erfindungsgemäßen Lagereinheit 3 sind die Trägereinheit 21 und die Folieneinheit 23 miteinander verbunden. Dadurch, dass die Trägereinheit 21 und die Folieneinheit 23 miteinander verbunden sind, wird eine besonders einfach aufgebaute Lagereinheit 3 bereitgestellt, die besonders gewichtseinsparend ausgebildet sein kann, da insbesondere auf eine Platteneinheit verzichtet werden kann. Wie bereits beschrieben sind die Trägereinheit 21 und die Folieneinheit 23 miteinander verbunden, was bei der in Figur 2 schematisch dargestellten Ausführungsform der erfindungsgemäßen Lagereinheit 3 dadurch gewährleistet ist, dass die Folieneinheit 23 auf die Trägereinheit 21 aufgeklebt ist. Dadurch, dass die Folieneinheit 23 auf die Trägereinheit 21 aufgeklebt ist, kann die Folieneinheit 23 besonders einfach ersetzt werden.

Bei einer alternativen Ausführungsform der erfindungsgemäßen Lagereinheit 3 ist zwischen der Trägereinheit 21 und der Folieneinheit 23 eine Platteneinheit angeordnet, wobei die Platteneinheit und die Folieneinheit 23 miteinander verbunden sind. Dadurch, dass zwischen der Trägereinheit 21 und der Folieneinheit 23 eine Platteneinheit angeordnet ist, wobei die Platteneinheit und die Folieneinheit 23 miteinander verbunden sind, wird gewährleistet, dass die Platteneinheit zusammen mit der Folieneinheit 23 ersetzt werden können, insbesondere ohne, dass die Trägereinheit 21 ersetzt oder bearbeitet werden muss. Bei der alternativen Ausführungsform der erfindungsgemäßen Lagereinheit 3 ist die Platteneinheit auf einer ersten Seite der Platteneinheit mit der Trägereinheit 21 verbunden und ist auf einer der ersten Seite gegenüberliegenden zweiten Seite der Platteneinheit mit der Folieneinheit 23 verbunden. Wenn nun die Folieneinheit 23 erneuert werden soll, können die Trägereinheit 21 und die Platteneinheit voneinander getrennt werden und die Platteneinheit kann zusammen mit der Folieneinheit 23 entfernt werden und eine neue Platteneinheit, die ebenfalls mit einer Folieneinheit 23 verbunden ist, kann mit der Trägereinheit 21 verbunden werden. Dadurch, dass zwischen der Trägereinheit 21 und der Folieneinheit 23 die Platteneinheit angeordnet ist, wobei die Platteneinheit und die Folieneinheit 23 miteinander verbunden sind, wird also der Austausch der Folieneinheit 23 deutlich vereinfacht. Wie bereits beschrieben sind die Platteneinheit und die Folieneinheit 23 miteinander verbunden, was bei der alternativen Ausführungsform der erfindungsgemäßen Lagereinheit 3 dadurch gewährleistet ist, dass die Folieneinheit 23 auf die Platteneinheit aufgeklebt ist. Dadurch, dass die Folieneinheit 23 auf die Platteneinheit aufgeklebt ist, kann die Folieneinheit 23 besonders einfach mit der Platteneinheit verbunden werden und wieder von der Platteneinheit entfernt werden.

Genauso wie die Folieneinheit 23, weist auch die Platteneinheit eine Vielzahl von Durchtrittsabschnitten auf. Jeder Durchtrittsabschnitt definiert eine Durchtrittsöffnung. Es können beispielhaft 130 Durchtrittsabschnitte und 130 Durchtrittsöffnungen vorgesehen sein. Die Trägereinheit 21, die Folieneinheit 23 und die Platteneinheit sind so relativ zueinander angeordnet, dass für jede Austrittsöffnung 31 die entsprechende Austrittsöffnung 31, eine der entsprechenden Austrittsöffnung 31 zugeordnete Durchtrittsöffnung eines entsprechenden Durchtrittsabschnitts der Platteneinheit und eine der entsprechenden Austrittsöffnung 31 zugeordnete Durchtrittsöffnung 35 eines entsprechenden Durchtrittsabschnitts 33 der Folieneinheit 23 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid zunächst durch die der entsprechenden Austrittsöffnung 31 zugeordnete Durchtrittsöffnung des entsprechenden Durchtrittsabschnitts der Platteneinheit und anschließend durch die der entsprechenden Austrittsöffnung 31 zugeordnete Durchtrittsöffnung 35 des entsprechenden Durchtrittsabschnitts 33 der Folieneinheit 23 hindurchströmt.

Dadurch, dass die Trägereinheit 21, die Folieneinheit 23 und die Platteneinheit so relativ zueinander angeordnet sind, dass für jede Austrittsöffnung 31 die entsprechende Austrittsöffnung 31, eine der entsprechenden Austrittsöffnung 31 zugeordnete Durchtrittsöffnung des entsprechenden Durchtrittsabschnitts der Platteneinheit und eine der entsprechenden Austrittsöffnung 31 zugeordnete Durchtrittsöffnung 35 des entsprechenden Durchtrittsabschnitts 33 der Folieneinheit 23 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid zunächst durch die der entsprechenden Austrittsöffnung 31 zugeordnete Durchtrittsöffnung des entsprechenden Durchtrittsabschnitts der Platteneinheit und anschließend durch die der entsprechenden Austrittsöffnung 31 zugeordnete Durchtrittsöffnung 35 des entsprechenden Durchtrittsabschnitts 33 der Folieneinheit 23 hindurchströmt, wird gewährleistet, dass die Lagereinheit 3 eine Platteneinheit aufweisen kann und so angeordnet sein kann, dass die Folieneinheit 23 auf der dem ebenen Riemenabschnitt 15 zugewandten Seite der Trägereinheit 21 angeordnet sein kann und bei dieser Anordnung mithilfe der Austrittsöffnungen, der Durchtrittsöffnungen und des gasförmigen Fluids sowie mithilfe der Folieneinheit 23 ein Lager zum Führen der Riemeneinheit 11 bereitgestellt werden kann. Dabei stellt die Lagereinheit 3 die zwei bereits beschriebenen Funktionen bereit und es kann gleichzeitig gewährleistet werden, dass die Folieneinheit 23 besonders einfach ersetzt werden kann. Bei der alternativen Ausführungsform der erfindungsgemäßen Lagereinheit 3 ist für jede Austrittsöffnung 31 eine entsprechende Durchtrittsöffnung 35 eines entsprechenden Durchtrittsabschnitts 33 der Folieneinheit 23 sowie eine entsprechende Durchtrittsöffnung eines entsprechenden Durchtrittsabschnitts der Platteneinheit vorgesehen.

Bei der in Figur 2 schematisch dargestellten Ausführungsform der erfindungsgemäßen Lagereinheit 3 ist die Trägereinheit 21 aus einer Metalllegierung, nämlich aus Stahl, gebildet. Dadurch, dass die Trägereinheit 21 aus einer Metalllegierung gebildet ist, wird eine mechanisch besonders robuste Trägereinheit 21 bereitgestellt. Dadurch, dass die Trägereinheit 21 aus Stahl gebildet ist, ist die mechanische Robustheit der Trägereinheit 21 besonders optimal eingestellt. Bei einer alternativen Ausführungsform der erfindungsgemäßen Lagereinheit 3 ist die Trägereinheit 21 aus einem Metall, nämlich aus Aluminium, gebildet. Dadurch, dass die Trägereinheit 21 aus Aluminium gebildet ist, kann die Trägereinheit 21 besonders gewichtssparend ausgebildet sein.

Bei der in Figur 2 schematisch dargestellten Ausführungsform der erfindungsgemäßen Lagereinheit 3 weist die Folieneinheit 23 ein Gewebe, nämlich ein Glasgewebe, und ein Polymer, nämlich ein Fluorpolymer in Form von Polytetrafluorethylen (PTFE), auf. Dadurch, dass die Folieneinheit 23 ein Gewebe, nämlich ein Glasgewebe, und ein Polymer, nämlich ein Fluorpolymer in Form von Polytetrafluorethylen (PTFE), aufweist, stellt die Folieneinheit 23 eine Oberfläche für einen Kontakt mit der Riemeneinheit 11, insbesondere mit dem ebenen Riemenabschnitt 15, bereit, wobei die Oberfläche einen geringen Reibwert bei einer hohen Abriebfestigkeit und einer hohen Temperaturfestigkeit aufweist. Die Abschnitte des Glasgewebes sind von dem Polytetrafluorethylen (PTFE) ummantelt, sodass das Glasgewebe für eine mechanische Robustheit der Folieneinheit 23 sorgt, insbesondere innerhalb einer Ebene, in der sich die Folieneinheit 23 erstreckt, und das Polytetrafluorethylen (PTFE) das Glasgewebe schützt und die Oberfläche für den Kontakt mit der Riemeneinheit 11 bereitstellt, sodass die Oberfläche einen besonders geringen Reibwert bei einer hohen Abriebfestigkeit und einer hohen Temperaturfestigkeit bereitstellen kann.

Die Lagereinheit 3 ist so auf einer der ersten Seite 17 gegenüberliegenden zweiten Seite 19 des ebenen Riemenabschnitts 15 angeordnet, dass die Folieneinheit 23 auf einer dem ebenen Riemenabschnitt 15 zugewandten Seite der Trägereinheit 21 angeordnet ist. Dadurch, dass die Lagereinheit 3 so auf einer der ersten Seite 17 gegenüberliegenden zweiten Seite 19 des ebenen Riemenabschnitts 15 angeordnet ist, dass die Folieneinheit 23 auf einer dem ebenen Riemenabschnitt 15 zugewandten Seite der Trägereinheit 21 angeordnet ist, wird gewährleistet, dass die Folieneinheit 23 für einen Kontakt mit dem ebenen Riemenabschnitt 15 vorgesehen ist und die Folieneinheit 23 die Trägereinheit 21 vor einem Kontakt mit dem ebenen Riemenabschnitt 15 schützt. Somit kann also gezielt die Folieneinheit 23 für einen Kontakt mit dem ebenen Riemenabschnitt 15 ausgelegt sein und bei einem Verschleiß der Folieneinheit 23 kann die Folieneinheit 23 erneuert oder ersetzt werden und die Trägereinheit 21 kann weiter verwendet werden, wodurch eine besonders ressourcenschonende Lagereinheit 3 und ein besonders ressourcenschonender Reifenprüfstand 1 bereitgestellt werden kann.

Die Riemeneinheit 11 weist eine Metalllegierung auf, nämlich Stahl, und kann auch als Stahlband bezeichnet werden. Insbesondere ist die Riemeneinheit 11 aus Stahl gebildet. Dadurch, dass die Riemeneinheit 11 aus Stahl gebildet ist, wird gewährleistet, dass die Riemeneinheit 11 bei unterschiedlichen Belastungszuständen des Reifens 5 lediglich besonders geringfügig verformt wird. Somit können mithilfe des Reifenprüfstands 1 Reifen 5 mechanisch besonders stark belastet werden.

Wenn der ebene Riemenabschnitt 15 nicht durch einen Reifen 5 belastet ist, so erstreckt sich der ebene Riemenabschnitt 15 entlang einer ersten Ebene. Auch dann, wenn der Reifen 5 den ebenen Riemenabschnitt 15 geringfügig belastet, erstreckt sich der erste Riemenabschnitt 15 entlang der ersten Ebene. Wenn die Belastung des ersten Riemenabschnitts 15 durch den Reifen 5 weiter zunimmt, so kommt es zu einer Verformung des ersten Riemenabschnitts 15 in eine Richtung hin zu der zweiten Seite 19 des ebenen Riemenabschnitts 15. Wie bereits beschrieben wirkt die Lagereinheit 3 dieser Verformung entgegen und verhindert somit eine derartige Verformung oder reduziert diese Verformung zumindest im Gegensatz zu einer Situation in der keine Lagereinheit 3 vorgesehen ist. Die Folieneinheit 23 erstreckt sich entlang einer zweiten Ebene, die in einem eingebauten Zustand, in dem die Lagereinheit 3 in dem Prüfstand 1 eingebaut ist, parallel zu der ersten Ebene verläuft. Dadurch, dass sich die Folieneinheit 23 entlang der zweiten Ebene erstreckt, wird durch die Folieneinheit 23 eine besonders ebene Oberfläche für einen Kontakt mit dem ebenen Riemenabschnitt 15 bereitgestellt, sodass einer besonders starken Verformung des ebenen Riemenabschnitts 15 in eine Richtung hin zu der Lagereinheit 3 mithilfe der Oberfläche der Folieneinheit 23 entgegengewirkt werden kann, wobei durch einen Kontakt zwischen der ebenen Oberfläche und dem ebenen Riemenabschnitt 15 der Riemenabschnitt 15 einer besonders geringen mechanischen Belastung ausgesetzt ist. Für den Fall, dass die Platteneinheit vorgesehen ist erstreckt sich die Platteneinheit entlang einer dritten Ebene, die parallel zu der zweiten Ebene verläuft. Dadurch, dass sich die Platteneinheit entlang der dritten Ebene erstreckt, die parallel zu der zweiten Ebene verläuft, wird gewährleistet, dass die Platteneinheit einen mechanisch robusten Abschnitt bildet, mit dem die Folieneinheit 23 verbunden ist und an den die Folieneinheit 23 dann, wenn sie mit dem ebenen Riemenabschnitt 15 in Kontakt kommt, auf sie durch diesen Kontakt wirkende Kräfte ableiten kann. Die Trägereinheit 21 erstreckt sich entlang einer vierten Ebene, die parallel zu der dritten Ebene und parallel zu der zweiten Ebene verläuft. Dadurch, dass sich die Trägereinheit 21 entlang einer vierten Ebene erstreckt, die parallel zu der dritten Ebene und parallel zu der zweiten Ebene verläuft, wird gewährleistet, dass die Trägereinheit 21 einen mechanisch robusten Abschnitt bildet, mit dem die Folieneinheit 23 verbunden ist und an den die Folieneinheit 23 dann, wenn die Folieneinheit 23 mit dem ebenen Riemenabschnitt 15 in Kontakt kommt, auf die Folieneinheit 23 durch diesen Kontakt wirkende Kräfte ableiten kann. Für den Fall, dass die Platteneinheit vorgesehen ist, bildet die Trägereinheit 21 einen mechanisch robusten Abschnitt, mit dem die Platteneinheit verbunden ist und an den die Platteneinheit dann, wenn die Folieneinheit 23 mit dem ebenen Riemenabschnitt 15 in Kontakt kommt, auf die Platteneinheit durch diesen Kontakt wirkende Kräfte ableiten kann.

Wie bereits beschrieben sind bei der in Figur 2 schematisch dargestellten Ausführungsform der erfindungsgemäßen Lagereinheit 3 beispielhaft 130 Ausgangsabschnitte, 130 Austrittsöffnungen, 130 Durchtrittsabschnitte und 130 Durchtrittsöffnungen schematisch dargestellt. Die vorliegenden Erfindung ist nicht auf diese konkrete Anzahlen beschränkt. Vielmehr sind auch andere Anzahlen vom Gedanken der Erfindung umfasst. Zur besseren Verdeutlichung jedes Ausgangsabschnitts 29, jeder Austrittsöffnung 31, jedes Durchtrittsabschnitts 33 und jeder Durchtrittsöffnung 35 ist ein Abschnitt in Figur 2 mit einer gestrichelten Umrandung vergrößert dargestellt, in dem ein Ausgangsabschnitt 29, eine Austrittsöffnung 31, ein Durchtrittsabschnitt 33 und eine Durchtrittsöffnung 35 dargestellt sind. Die zwei gestrichelten Linien, die in Figur 2 zwischen der Lagereinheit 3 und der vergrößerten Darstellung angeordnet sind weisen auf den Ort an dem der beispielhafte Abschnitt bei der Lagereinheit 3 angeordnet ist.

Wie bereits beschrieben zeigt Figur 3 eine schematische Darstellung der Ausführungsform des erfindungsgemäßen Verfahrens zum Herstellen der in Figur 2 schematisch dargestellten Ausführungsform der erfindungsgemäßen Lagereinheit 3. In einem ersten Verfahrensschritt 101 des Verfahrens wird die Trägereinheit 21 bereitgestellt. In einem zweiten Verfahrensschritt 102 des Verfahrens werden in die Folieneinheit 23 Durchtrittsöffnungen eingebracht. In einem dritten Verfahrensschritt 103 des Verfahrens wird die Folieneinheit 23 auf die Trägereinheit 21 geklebt. Dadurch, dass die Folieneinheit 23 auf die Trägereinheit 21 geklebt wird, wird gewährleistet, dass die Lagereinheit 3 besonders einfach und schnell hergestellt werden kann und die Folieneinheit 23 besonders einfach ersetzt werden kann.

In dem dritten Verfahrensschritt 103 des Verfahrens wird die Folieneinheit 23 so auf die Trägereinheit 21 geklebt, dass die Trägereinheit 21 und die Folieneinheit 23 so relativ zueinander angeordnet sind, dass für jede Austrittsöffnung 31 die entsprechende Austrittsöffnung 31 und eine der entsprechenden Austrittsöffnung 31 zugeordnete Durchtrittsöffnung 35 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid durch die der entsprechenden Austrittsöffnung 31 zugeordnete Durchtrittsöffnung 35 hindurchströmt.

Mithilfe des Verfahrens kann also die Lagereinheit 3 hergestellt werden. In dem Verfahren wird die Trägereinheit 21 und die Folieneinheit 23 so bereitgestellt, dass die Trägereinheit 21 und die Folieneinheit 23 so relativ zueinander angeordnet sind, dass für jede Austrittsöffnung 31 die entsprechende Austrittsöffnung 31 und eine der entsprechenden Austrittsöffnung 31 zugeordnete Durchtrittsöffnung 35 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid durch die der entsprechenden Austrittsöffnung 31 zugeordnete Durchtrittsöffnung 35 hindurchströmt. Dadurch, dass die Trägereinheit 21 und die Folieneinheit 23 so relativ zueinander angeordnet sind, dass für jede Austrittsöffnung 31 die entsprechende Austrittsöffnung 31 und eine der entsprechenden Austrittsöffnung 31 zugeordnete Durchtrittsöffnung 35 so relativ zueinander angeordnet sind, dass dann, wenn das mit dem Druck beaufschlagte gasförmige Fluid aus der entsprechenden Austrittsöffnung 31 ausströmt, das aus der entsprechenden Austrittsöffnung 31 ausströmende gasförmige Fluid durch die der entsprechenden Austrittsöffnung 31 zugeordnete Durchtrittsöffnung 35 hindurchströmt, wird gewährleistet, dass die Lagereinheit 3 so angeordnet sein kann, dass die Folieneinheit 23 auf einer dem ebenen Riemenabschnitt 15 zugewandten Seite der Trägereinheit 21 angeordnet sein kann und bei dieser Anordnung mithilfe der Austrittsöffnungen, der Durchtrittsöffnungen und des gasförmigen Fluids sowie mithilfe der Folieneinheit 23 ein Lager zum Führen der Riemeneinheit 11 bereitgestellt werden kann. Dabei stellt die Lagereinheit 3 die zwei bereits beschriebenen Funktionen bereit.

Auch wenn die Verfahrensschritte in einer bestimmten Reihenfolge beschrieben werden, ist die vorliegende Erfindung nicht auf diese Reihenfolge beschränkt. Vielmehr können die einzelnen Verfahrensschritte in beliebig sinnvoller Reihenfolge, insbesondere auch zumindest abschnittsweise zeitlich parallel zueinander, durchgeführt werden.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Reifenprüfstand
- 3: Lagereinheit
- 5: Reifen
- 7: Lauffläche
- 9: Drehachse
- 11: Riemeneinheit
- 13: Umlenkrolle
- 15: ebener Riemenabschnitt
- 17: erste Seite des ebenen Riemenabschnitts
- 19: zweite Seite des ebenen Riemenabschnitts
- 21: Trägereinheit
- 23: Folieneinheit
- 25: Eingangsabschnitt
- 27: Eintrittsöffnung
- 29: Ausgangsabschnitt
- 31: Austrittsöffnung
- 33: Durchtrittsabschnitt
- 35: Durchtrittsöffnung eines Durchtrittsabschnitts der Folieneinheit

- 101: erster Verfahrensschritt
- 102: zweiter Verfahrensschritt
- 103: dritter Verfahrensschritt

## Patentansprüche

1. Lagereinheit (3) für einen Reifenprüfstand (1),
wobei die Lagereinheit (3) eine Trägereinheit (21) und eine Folieneinheit (23) aufweist,
wobei die Trägereinheit (21) einen Eingangsabschnitt (25), der eine Eintrittsöffnung (27) definiert, und eine Vielzahl von Ausgangsabschnitten aufweist, wobei jeder Ausgangsabschnitt (29) der Vielzahl von Ausgangsabschnitten eine Austrittsöffnung (31) definiert, wobei jede Austrittsöffnung (31) so mit der Eintrittsöffnung (27) verbunden ist, dass dann, wenn ein mit einem Druck beaufschlagtes gasförmiges Fluid in die Eintrittsöffnung (27) einströmt, das mit dem Druck beaufschlagte gasförmige Fluid aus jeder Austrittsöffnung (31) ausströmt,
wobei die Folieneinheit (23) eine Vielzahl von Durchtrittsabschnitten aufweist, wobei jeder Durchtrittsabschnitt (33) der Vielzahl von Durchtrittsabschnitten eine Durchtrittsöffnung (35) definiert, und
wobei die Trägereinheit (21) und die Folieneinheit (23) so relativ zueinander angeordnet sind, dass für jede Austrittsöffnung (31) die entsprechende Austrittsöffnung (31) und eine der entsprechenden Austrittsöffnung (31) zugeordnete Durchtrittsöffnung (35) so relativ zueinander angeordnet sind, dass dann, wenn das mit dem Druck beaufschlagte gasförmige Fluid aus der entsprechenden Austrittsöffnung (31) ausströmt, das aus der entsprechenden Austrittsöffnung (31) ausströmende gasförmige Fluid durch die der entsprechenden Austrittsöffnung (31) zugeordnete Durchtrittsöffnung (35) hindurchströmt.

2. Lagereinheit (3) nach dem vorhergehenden Anspruch, wobei die Trägereinheit (21) und die Folieneinheit (23) miteinander verbunden sind.

3. Lagereinheit (3) nach Anspruch 1, wobei zwischen der Trägereinheit (21) und der Folieneinheit (23) eine Platteneinheit angeordnet ist, wobei die Platteneinheit und die Folieneinheit (23) miteinander verbunden sind.

4. Lagereinheit (3) nach einem der vorhergehenden Ansprüche, wobei die Trägereinheit (21) ein Metall oder eine Metalllegierung aufweist.

5. Lagereinheit (3) nach einem der vorhergehenden Ansprüche, wobei die Folieneinheit (23) ein Gewebe aufweist.

6. Lagereinheit (3) nach einem der vorhergehenden Ansprüche, wobei die Folieneinheit (23) ein Polymer aufweist.

7. Verfahren zum Herstellen einer Lagereinheit (3) nach einem der vorhergehenden Ansprüche, wobei das Verfahren die folgenden Schritte aufweist: Bereitstellen der Trägereinheit (21) und der Folieneinheit (23) so, dass die Trägereinheit (21) und die Folieneinheit (23) so relativ zueinander angeordnet sind, dass für jede Austrittsöffnung (31) die entsprechende Austrittsöffnung (31) und eine der entsprechenden Austrittsöffnung (31) zugeordnete Durchtrittsöffnung (35) so relativ zueinander angeordnet sind, dass dann, wenn das mit dem Druck beaufschlagte gasförmige Fluid aus der entsprechenden Austrittsöffnung (31) ausströmt, das aus der entsprechenden Austrittsöffnung (31) ausströmende gasförmige Fluid durch die der entsprechenden Austrittsöffnung (31) zugeordnete Durchtrittsöffnung (35) hindurchströmt.

8. Verfahren nach Anspruch 7, wobei die Folieneinheit (23) so auf die Trägereinheit (21) geklebt wird, dass die Trägereinheit (21) und die Folieneinheit (23) so relativ zueinander angeordnet sind, dass für jede Austrittsöffnung (31) die entsprechende Austrittsöffnung (31) und eine der entsprechenden Austrittsöffnung (31) zugeordnete Durchtrittsöffnung (35) so relativ zueinander angeordnet sind, dass dann, wenn das mit dem Druck beaufschlagte gasförmige Fluid aus der entsprechenden Austrittsöffnung (31) ausströmt, das aus der entsprechenden Austrittsöffnung (31) ausströmende gasförmige Fluid durch die der entsprechenden Austrittsöffnung (31) zugeordnete Durchtrittsöffnung (35) hindurchströmt.

9. Reifenprüfstand (1)
mit einem Rahmen,
mit einem an dem Rahmen angebrachten Reifenhalter, an dem ein Reifen (5) mit einer Lauffläche (7) um seine Drehachse (9) drehbar angebracht werden kann,
mit einer Riemeneinheit (11) und
mit zwei gegenüber dem Rahmen drehbar gelagerten Umlenkrollen, wobei die Umlenkrollen von der Riemeneinheit (11) teilweise umschlungen sind, sodass die Riemeneinheit (11) zwischen den Umlenkrollen einen ebenen Riemenabschnitt (15) bildet,
wobei dann, wenn an dem Reifenhalter der Reifen (5) drehbar angebracht ist, der Reifen (5) auf einer ersten Seite (17) des ebenen Riemenabschnitts (15) in eine Kontaktposition verbracht werden kann, in der die Lauffläche (7) des Reifens (5) und der ebene Riemenabschnitt (15) in Kontakt sind,
wobei dann, wenn der Reifen (5) und der ebene Riemenabschnitt (15) in Kontakt sind und die Riemeneinheit (11) gegenüber dem Reifen (5) bewegt wird, der Reifen (5) auf dem ebenen Riemenabschnitt (15) abrollt, und
wobei der Reifenprüfstand (1) eine Lagereinheit (3) nach einem der Ansprüche 1 bis 6 aufweist, wobei die Lagereinheit (3) so auf einer der ersten Seite (17) gegenüberliegenden zweiten Seite (19) des ebenen Riemenabschnitts (15) angeordnet ist, dass die Folieneinheit (23) auf einer dem ebenen Riemenabschnitt (15) zugewandten Seite der Trägereinheit (21) angeordnet ist.

10. Reifenprüfstand (1) nach dem vorhergehenden Anspruch, wobei die Riemeneinheit (11) ein Metall oder eine Metalllegierung aufweist.
